Europäisches Patentamt

European Patent Office

Office européen des brevets

(19)

(11) Veröffentlichungsnummer: **0 450 555 A2**

(12)                    **EUROPÄISCHE PATENTANMELDUNG**

(21) Anmeldenummer: **91105161.3**

(22) Anmeldetag: **02.04.91**

(51) Int. Cl.⁵: **B23Q 7/14**

(30) Priorität: **03.04.90 DE 4010697**

(43) Veröffentlichungstag der Anmeldung:
**09.10.91 Patentblatt 91/41**

(84) Benannte Vertragsstaaten:
**AT BE CH DE ES FR GB IT LI NL SE**

(71) Anmelder: **PROTECH AUTOMATION GmbH**
**Niederkasseler Strasse 14**
**W-5000 Köln 90(DE)**

(72) Erfinder: **Blöcker, Detlef, Dipl.-Ing.**
**Alter Heeresweg 32**
**W-5330 Königswinter 21(DE)**

(74) Vertreter: **Selting, Günther, Dipl.-Ing. et al**
**Patentanwälte von Kreisler, Selting, Werner**
**Deichmannhaus am Hauptbahnhof**
**W-5000 Köln 1(DE)**

(54) **Montagestation.**

(57) Auf einem Förderer (10) werden Werkstückträger (12) gefördert, die von einer Positionier- und Haltevorrichtung (15) aufgenommen werden können, damit die auf ihnen befindlichen Werkstücke bearbeitet werden. Eine Anhaltevorrichtung (30) ist in Förderrichtung hinter der Positionier- und Haltevorrichtung (15) angeordnet. Ein vorlaufender Werkstückträger (I) wird von der Anhaltevorrichtung in der Weise angehalten, daß ein nachfolgender Werkstückträger (II) exakt in der Aufnahmeposition der Positionier- und Haltevorrichtung (15) zum Stillstand kommt. Dadurch ist eine exakte Positionierung und Vereinzelung der Werkstückträger ohne hochgenaue Steuerung eines Vereinzelungselements möglich. Ein vorlaufender Werkstückträger (I) bleibt solange an dem Anschlag (34), bis er einen nachlaufenden Werkstückträger (II) in der Positionier- und Haltevorrichtung (15) angehalten hat.

FIG.1

EP 0 450 555 A2

Die Erfindung betrifft eine Montagestation der im Oberbegriff des Patentanspruchs 1 angegebenen Art.

Es ist bekannt, für Fertigungsanlagen, insbesondere Montageanlagen, Förderer zu verwenden, die beispielsweise als Bandförderer, Kettenföderer oder Rollenförderer ausgebildet sind. Auf den Förderer werden die Werkstückträger in Form von Paletten aufgesetzt und zwischen Handhabungspositionen transportiert. An diesen Handhabungspositionen werden die Werkstückträger gestoppt, fixiert, angehoben und stillgesetzt, während der Förderer, soweit er angetrieben ist, weiterlaufen kann.

Eine Montagestation, von der der Oberbegriff des Patentanspruchs 1 ausgeht, ist in DE 38 32 845 C1 beschrieben. Bei dieser Montagestation besteht die Positionier- und Haltevorrichtung, mit der ein Werkstückträger von dem Förderer abgehoben, stillgesetzt und in definierter Form positioniert und festgehalten wird, aus mehreren, auf einer Seite des Transportweges fest angeordneten Klingen, die in eine V-Nut an der Seite des Werkstückträgers eingreifen können, und mehreren auf der gegenüberliegenden Seite des Transportweges angeordneten bewegbaren Stiften, die in Zentrierbohrungen des Werkstückträgers eindringen können. Die Klingen und Stifte bewirken das Abheben des Werkstückträgers von dem Förderer. Damit die Stifte exakt in die Positionierbohrungen des Werkstückträgers eindringen können, ist eine Anhaltevorrichtung erforderlich, die den Werkstückträger an der Positionier- und Haltevorrichtung stillsetzt. Diese Anhaltevorrichtung besteht aus einem im Transportweg der Werkstückträger angeordneten Kippelement, das derart betätigt werden kann, daß es in den Transportweg hineinragt und einen Anschlag für die Werkstückträger bildet, und in einer zweiten Stellung den Transportweg freigibt. Bei der bekannten Montagestation ist der Förderer als Duplex-Förderer mit zwei parallelen Förderbändern ausgebildet, auf denen die seitlichen Ränder der Werkstückträger aufliegen. Der bewegbare Anschlag ist in der Mitte zwischen den Transportbändern unterhalb des Förderweges angeordnet.

Es gibt Fälle, in denen es nicht möglich ist, die Anhaltevorrichtung im Transportweg unter den Werkstückträgern anzuordnen. Dies ist der Fall, wenn die Werkstückträger kleinformatig sind. Es gibt Werkstückträger mit einer Kantenlänge von nur 20 - 50 mm, die zur Aufnahme kleinformatiger Bauteile, z.B. elektrischer oder elektronischer Komponenten, bestimmt sind. Solche Werkstückträger erfordern häufig den Einsatz eines Simplex-Förderers mit nur einem einzigen Förderriemen. Selbst wenn ein Duplex-Förderer benutzt werden kann, reicht der Platz zwischen den beiden Förderbändern häufig nicht aus, um dort die Anhaltevorrichtung zu installieren.

Der Erfindung liegt die Aufgabe zugrunde, eine Montagestation der im Oberbegriff des Patentanspruchs 1 angegebenen Art zu schaffen, die auch bei ungünstigen Platzverhältnissen, insbesondere bei kleinformatigen Werkstückträgern, einsetzbar ist und das exakte Anhalten einzelner Werkstückträger an der Positionier- und Haltevorrichtung sowie auch das Vereinzeln unmittelbar aufeinander folgender Werkstückträger ermöglicht.

Die Lösung dieser Aufgabe erfolgt erfindungsgemäß mit den im kennzeichnenden Teil des Patentanspruchs 1 angegebenen Merkmalen.

Nach der Erfindung ist die Anhaltevorrichtung um ein ganzzahliges Maß der Werkstückträgerlänge stromab von der Aufnahmeposition angeordnet, in der ein Werkstückträger von der Positionier- und Haltevorrichtung aufgenommen werden kann. Die Anhaltevorrichtung weist einen seitlich in den Transportweg hineinragenden bewegbaren Anschlag auf, gegen den ein vorlaufender Werkstückträger aufläuft. Ein nachfolgender Werkstückträger, der gegen den angehaltenen vorlaufenden Werkstückträger stößt, befindet sich exakt in der Aufnahmeposition der Positionier- und Haltevorrichtung. Auf diese Weise ist auch eine Vereinzelung unmittelbar aufeinanderfolgender Werkstückträger möglich, weil der von der Anhaltevorrichtung festgehaltene vorlaufende Werkstückträger, nachdem er den nachfolgenden Werkstückträger angehalten hat und dieser von der Positionier- und Haltevorrichtung ergriffen wurde, für den Weitertransport freigegeben werden kann, indem der Anschlag aus dem Transportweg entfernt wird. Der Anschlag kann anschließend wieder in den Transportweg hineinbewegt werden, um den nachfolgenden Werkstückträger, nachdem dieser von der Positionier- und Haltevorrichtung freigegeben wurde, von neuem aufzuhalten, so daß dieser Werkstückträger dann den nachfolgenden Werkstückträger an der Positionier- und Haltevorrichtung stillsetzt. Es kommt dabei nicht vor, daß der Anschlag der Anhaltevorrichtung von zwei unmittelbar aufeinanderfolgenden Werkstückträgern passiert wird. Vielmehr kann dieser Anschlag in den leeren Transportweg hineinbewegt werden, bevor der nächstfolgende Werkstückträger ankommt. Der Anschlag braucht also nicht mit hoher zeitlicher Genauigkeit gesteuert zu werden, um zwischen zwei Werkstückträger einzugreifen.

Die erfindungsgemäße Montagestation paßt sich selbst-tätig auf willkürlich ankommende Werkstückträger an. Sie hält mindestens einen der Werkstückträger als Auffangelement immer an dem Anschlag, solange, bis ein nachfolgender Werkstückträger die Positionier- und Haltevorrichtung erreicht hat. Erst dann wird der als Positionierhilfe benutzte Werkstückträger für den Weitertransport freigegeben. Der jeweils vorlaufende Werkstücktä-

ger bildet somit eine Positionierhilfe für den nachfolgenden Werkstückträger, wobei gleichzeitig veranlaßt wird, daß die Werkstückträger die Montagestation mit gegenseitigen räumlichen Abständen verlassen.

Die erfindungsgemäße Montagestation eignet sich insbesondere für kleine Werkstückträger mit einer Länge von höchstens 50 mm, ist aber grundsätzlich auch bei großen Werkstückträgern anwendbar.

Die Steuerung des Anschlags der Anhaltevorrichtung und des Stifts der Positionier- und Haltevorrichtung erfolgt zweckmäßigerweise durch Sensoren sowie natürlich durch entsprechende Signale der Bearbeitungsvorrichtung, welche die Bearbeitung der auf den Werkstückträgern befindlichen Werkstücke an der Positionier- und Haltevorrichtung vornimmt. Die Freigabe aus der Positionier- und Haltevorrichtung darf erst dann erfolgen, wenn die Werkstückbearbeitung beendet ist. Andererseits kann die Freigabe erst durchgeführt werden, wenn der nachfolgende Transportweg frei ist und dort kein Stau von Werkstückträgern vorhanden ist. Der Förderer läuft kontinuierlich weiter und ein angehaltener Werkstückträger gleitet somit auf dem Förderer.

Gemäß einer bevorzugten Ausführungsform der Erfindung sind die Betätigungsmechanismen für den Anschlag und die Positionier- und Haltevorrichtung untereinander gleich ausgebildet, so daß ein einfacher modularer Aufbau mit austauschbaren Komponenten erhalten wird.

Zweckmäßigerweise ist an der Positionier- und Haltevorrichtung ein Versteifungsrahmen vorgesehen, der den Steg des Förderers überbrückt und diesen Steg von den Reaktionskräften der Klemmkraft entlastet.

Im folgenden werden unter Bezugnahme auf die Zeichnungen Ausführungsbeispiele · der Erfindung näher erläutert.

Es zeigen:

Fig. 1     bei einer ersten Ausführungsform eine Draufsicht auf den Förderer an der Montagestation,

Fig. 2     einen Schnitt entlang der Linie II-II von Fig. 1,

Fig. 3     eine perspektivische Ansicht eines Werkstückträgers,

Fig. 4     die Draufsicht auf den Förderer an der Montagestation bei einer zweiten Ausführungsform und

Fig. 5     einen Schnitt durch Fig. 4, im wesentlichen entlang der Linie V-V.

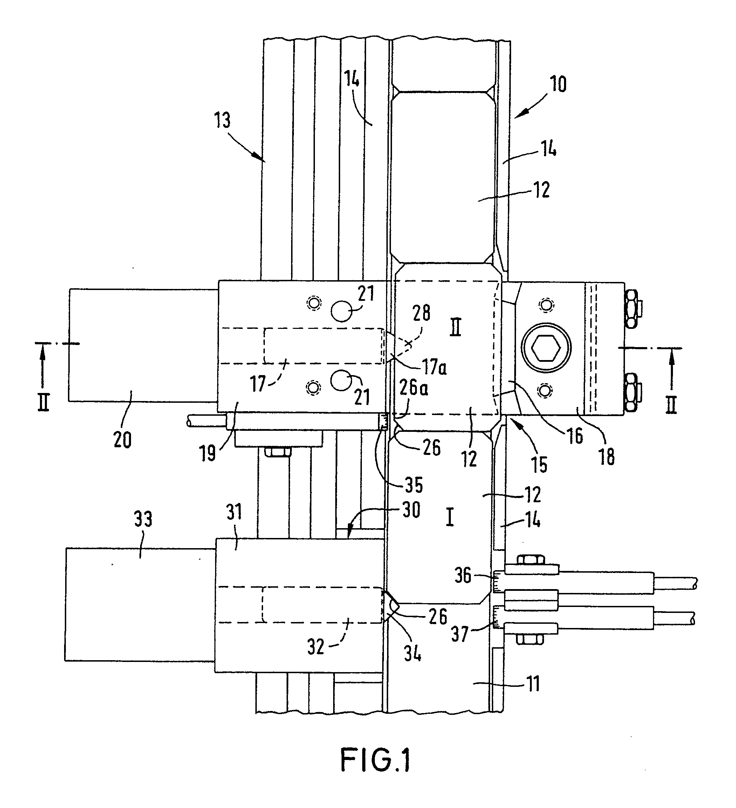

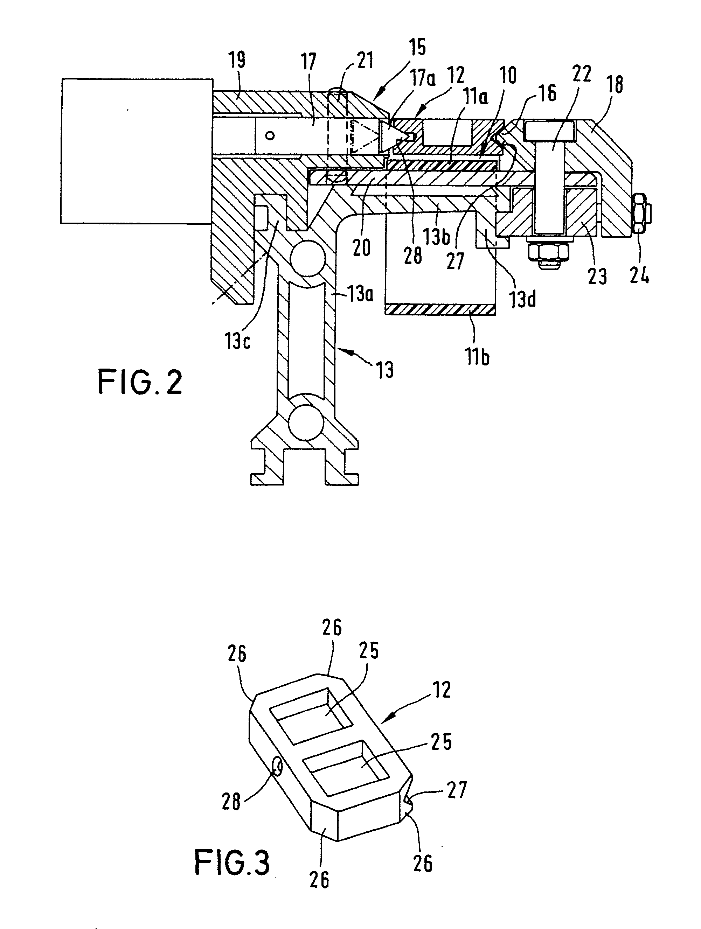

Bei dem Ausführungsbeispiel der Fign. 1-3 ist ein Förderer 10 vorgesehen, der ein endloses Förderband 11 aufweist. In Fig. 2 ist der Obertrum des Förderbandes 11 mit 11a und der Untertrum mit 11b bezeichnet. Auf dem Obertrum 11a liegen die Werkstückträger 12 auf. Der Förderer 10 wird von einem Trägerprofil 13 getragen, das einen vertikalen Profilbalken 13a, einen davon seitlich abstehenden Steg 13b sowie zwei längslaufende Klemmleisten 13c und 13d aufweist. Der Steg 13b bildet die Unterstützung für den Obertrum 11a des Förderbandes, während die Klemmleisten 13c und 13d Befestigungsvorrichtungen für beidseitig des Förderers anzubringende Komponenten bilden. An dem Steg 13b sind seitliche Führungselemente 14 befestigt, welche den Transportweg seitlich begrenzen und Gleitflächen für die Seitenwände der Werkstückträger 12 bilden.

An der Positionier- und Haltevorrichtung 15 ist auf einer Seite des Transportweges eine feststehende Klinge 16 und auf der gegenüberliegenden Seite ein quer zum Transportweg verschiebbarer Stift 17 mit einer Spitze 17a angeordnet. Die Klinge 16 ist fester Bestandteil eines Klemmblocks 18, der an dem Klemmprofil 13b befestigt ist, und der Stift 17 ist in einem Klemmblock 19 geführt, der an der Klemmleiste 13c befestigt ist und einen Betätigungsmechanismus 19a zum Verschieben des Stifts 17 trägt. Die Klemmblöcke 18 und 19 sind durch einen Versteifungsrahmen 20 untereinander verbunden, der quer über den Steg 13b verläuft. Dieser Versteifungsrahmen 20 entlastet den Steg 13b von den Zugkräften, die entstehen, wenn durch den Antrieb des Stifts 17 der Werkstückträger 12 seitlich eingespannt wird. Der Versteifungsrahmen 20 ist an einem Ende über einen vertikalen Stift 21 mit dem Block 19 verbunden und am anderen Ende über einen Bolzen 22 mit dem Block 18. Der Bolzen 22 dient darüber hinaus zum Festklemmen des Blocks 18 und eines Halters 23 an der Klemmleiste 13d. Zur Feststellung der Verspannung ist eine Schraube 24 vorgesehen, die an dem Block 18 verstellbar ist und horizontal gegen den Halter 23 drückt.

Die Werkstückträger 12 bestehen aus den in Fig. 3 dargestellten Doppelwannen. Es handelt sich um einstückige Teile aus Eisen, die zwei in Längsrichtung hintereinander angeordnete Ausnehmungen 25 aufweisen. Die Werkstückträger haben generell rechteckigen Grundriß, wobei im vorliegenden Fall die Länge (in Transportrichtung) doppelt so groß ist wie die Breite. An den Ecken der Werkstückträger befinden sich Abschrägungen 26 von 45°, die sich über die gesamte Höhe erstrecken. Längs der einen Seite des Werkstückträgers verläuft eine V-Nut 27, in die die Klinge 16 eindringen kann, und auf der gegenüberliegenden Seite befindet sich in der Mitte der Längserstreckung des Werkstückträgers eine konische Zentrierbohrung 28, in die die Spitze 17a eindringen kann. Die Wannen 25 bilden die Aufnahmeräume für Werkstücke.

Gemäß Fig. 1 ist stromab von der Positionier- und Haltevorrichtung 15 die Anhaltevorrichtung 30 angeordnet. Diese besteht aus einem an der Klemmleiste 13c befestigten Block 31, in dem ein Stift 32 quer zum Transportweg verschiebbar ist, und dem Betätigungsmechanismus 33 zum Verschieben des Stifts 32. Der Stift 32 hat eine Spitze 34 mit einem Scheitelwinkel von 90°. Diese Spitze 34 bildet einen Anschlag, gegen den die Abschrägung 26 am vorlaufenden Ende des Werkstückträgers 12 auflaufen kann. Der Block 31 und der Betätigungsmechanismus 33 sind baugleich mit dem Block 19 und dem Betätigungsmechanismus 19a. Lediglich die Spitze 34 unterscheidet sich von der Spitze 17a, die einen Kegelwinkel von nur 60° aufweist.

Wie Fig. 1 zeigt, ist die Anhaltevorrichtung 30 gegenüber der Positionier- und Haltevorrichtung um die Länge eines Werkstückträgers 12 in Förderrichtung stromab angeordnet. Der vorlaufende Werkstückträger 12, der von der Spitze 34 aufgehalten wird, ist mit I bezeichnet und der gegen den vorlaufenden Werkstückträger I auflaufende nachfolgende Werkstückträger ist mit II bezeichnet. Wenn der Werkstückträger II gegen den vorlaufenden Werkstückträger I stößt, befindet er sich in der Positionier- und Haltevorrichtung 15 exakt in der Aufnahmeposition. Wenn hierbei der Stift 17 aus dem Block 19 heraus in den Transportweg der Werkstückträger vorgeschoben wird, dringt er in die Zentrierbohrung 28 ein, und er drückt dabei den Werkstückträger in Richtung auf die Klinge 16. Da die horizontale Mittelebene der Klinge 16 und der Spitze 17a höher liegen als die horizontale Mittelebene der V-Nut 27 und der Zentrierbohrung 28 des auf dem Förderband 11 ruhenden Werkstückträgers 12, wird der Werkstückträger vom Förderband angehoben. In dieser Position kann von einer (nicht dargestellten) Bearbeitungs- oder Montagevorrichtung eine Bearbeitung der von dem Werkstückträger 12 getragenen Werkstücke durchgeführt werden. Nach Beendigung der Bearbeitung wird der Stift 17 zurückgezogen, so daß der Werkstückträger wieder auf das Förderband 11 abgesenkt wird und von diesem weitergefördert werden kann.

An dem stromab angeordneten Ende des Blocks 19 ist ein erster Sensor 35 angeordnet, bei dem es sich um einen auf das Metall der Werkstückträger reagierenden Näherungsschalter handelt. Dieser Sensor 35 reagiert auf die Annäherung des der Abschrägung 26 folgenden Bereichs 26a der Seitenwand des Werkstückträgers. Er ist so angeordnet, daß er von dem Bereich 26a dann erregt wird, wenn der Werkstückträger II sich in der Aufnahmeposition der Positionier- und Haltevorrichtung 15 befindet.

Ein zweiter Sensor 36 ist an der Anhaltevorrichtung 30 gegenüber der Spitze 34 an einer Stelle angeordnet, an der er von dem Werkstückträger erregt wird, wenn dieser mit seiner Abschrägung 26 soeben gegen die Spitze 34 gestoßen ist.

Ein dritter Sensor 37 ist stromab von dem ersten Sensor 36 an einer Stelle angeordnet, an der er erkennt, ob der der Anhaltevorrichtung 30 folgende Bereich der Förderstrecke frei ist, d.h. daß kein vorlaufender Förderer in den auf die Anhaltevorrichtung 30 folgenden Bereich hineinragt. Nur wenn die Förderstrecke für mindestens eine Werkstückträgerlänge frei ist, kann nämlich die Spitze 34 zurückgezogen werden, um den Werkstückträger I für den Weitertransport freizugeben. Befindet sich dagegen noch ein Werkstückträger im Bereich des dritten Sensors 37, dann wird die Freigabe der Spitze 34 blockiert. Die Sensoren 36 und 37 sind auf der Seite der Klinge 16 angeordnet, also auf der den Spitzen 17a und 34 gegenüberliegenden Seite des Transportweges.

Die Sensoren 35 und 36 steuern die Stifte 17 und 32 in der Weise, daß ein von der Spitze 34 festgehaltener Werkstückträger I erst dann freigegeben werden kann, wenn ein nachfolgender Werkstückträger II von der Positionier- und Haltevorrichtung 15 festgehalten wird. Eine weitere Bedingung für die Freigabe des Werkstückträgers I ist, daß der weitere Transportweg für die Aufnahme dieses Werkstückträgers frei ist, d.h. daß der dritte Sensor 37 keinen vorlaufenden Werkstückträger erkennt. Wenn in der Positionier- und Haltevorrichtung ein Werkstückträger II festgespannt ist und wenn der weitere Transportweg frei ist, wird die Spitze 34 zurückgezogen und der Werkstückträger I wird von dem sich unter ihm bewegenden Förderband 11 mitgenommen. Sobald der Werkstückträger 12 den zweiten Sensor 36 (oder den dritten Sensor 37) passiert hat, wird die Spitze 34 wieder in den Transportweg hineinbewegt. Erst wenn die Spitze 34 wieder im Transportweg ist, kann die Positionier- und Haltevorrichtung 15 durch Zurückziehen der Spitze 17a den nachfolgenden Werkstückträger II auf den Förderer absenken und freigeben. Dieser Werkstückträger II läuft dann gegen die Spitze 34, von der er solange festgehalten wird, bis ein nachfolgender Werkstückträger von der Positionier- und Haltevorrichtung 15 aufgenommen wurde. An der Anhaltevorrichtung 30 wird somit immer ein Werkstückträger I festgehalten und dieser Werkstückträger bildet mit seiner Rückseite einen Anschlag, gegen den ein nachfolgender Werkstückträger II aufläuft, um dann von der Positionier- und Haltevorrichtung 15 festgehalten zu werden.

Würde sich die Spitze 34 des Stifts 32 an der Stelle befinden, an der gemäß Fig. 1 der Sensor 35 angeordnet ist, dann müßte diese Spitze, sobald ein Werkstückträger die Positionier- und Haltevorrichtung verläßt, zu einem ganz bestimmten Zeitpunkt vorwärtsbewegt werden, um einen unmittelbar folgenden zweiten Werkstückträger von dem ersten Werkstückträger zu trennen. Eine solche hochgenaue Zeitsteuerung, die auch eine exakte Erfassung der Positionen zweier Werkstückträger erfordern würde, ist bei der beschriebenen Montagestation nicht erforderlich.

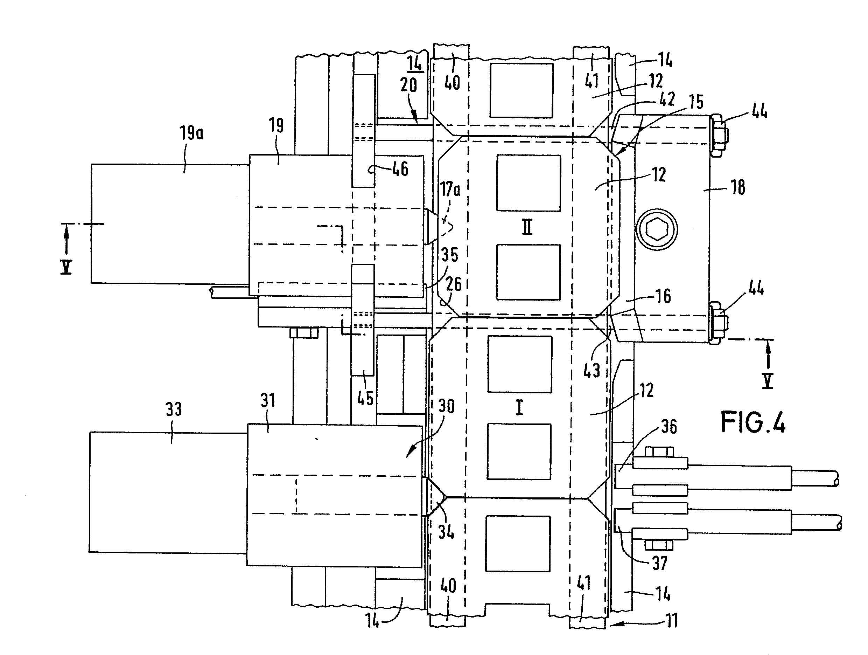

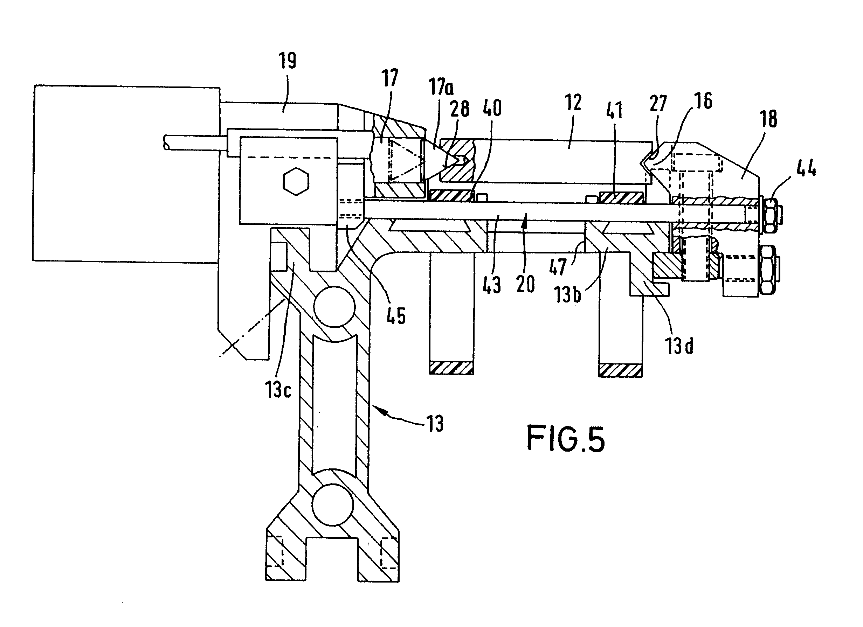

Das Ausführungsbeispiel der Fign. 4 und 5 entspricht weitgehend dem ersten Ausführungsbeispiel, wobei in beiden Fällen für gleiche Komponenten auch die gleichen Bezugszeichen benutzt sind. Im folgenden werden lediglich die Unterschiede gegenüber dem ersten Ausführungsbeispiel beschrieben.

Der Förderer 10 der Fign. 4 und 5 ist ein Duplex-Förderer mit zwei Förderbändern 40,41, die parallel zueinander und mit gegenseitigem Abstand verlaufen. Die Werkstückträger 12 werden mit ihren seitlichen Randbereichen auf die Förderbänder 40 und 41 aufgesetzt. Die Werkstückträger sind bei diesem Ausführungsbeispiel quadratisch, jedoch haben sie ebenfalls Abschrägungen 26 an den Ecken.

Der Versteifungsrahmen 20 weist zwei Zugstangen 42,43 auf, die an dem Block 18 mit Muttern 44 verankert sind und die an ihrem anderen Ende mit einem gabelförmigen Halter 45 verbunden sind, der in eine entsprechende Aussparung 46 des Blocks 19 eingreift, so daß quer zur Förderrichtung verlaufende Kräfte des Blocks 19 auf den Halter 45 und von diesem über die Zugstangen 42,43 auf den Block 18 übertragen werden. Die Stangen 42 und 43 verlaufen durch Querbohrungen des Steges 13b hindurch.

Im Steg 13b sind Aussparungen 47 (Fig. 5) vorgesehen, durch die hindurch die Unterseiten der Werkstückträger zugänglich sind. In den Aussparungen 47 können Sensoren oder aktive oder passive Komponenten des Förderers montiert werden oder auch Werkzeugvorrichtungen, die von unten her an den Werkstücken angreifen, sofern die Werkstückträger anstelle der Ausnehmungen 25 bzw. Nester vertikal durchgehende Durchbrüche aufweisen.

Besonders vorteilhaft ist die einseitig offene Bauweise des Förderers 10, d.h. der Umstand, daß der vertikale Profilbalken 13a nur an einer Seite des Steges 13b des Trägerprofils 13 angeordnet ist. Dadurch kann ein endloser Fördergurt zum seitlich auskragenden Ende des Steges 13b hin leicht gewechselt werden. Insbesondere bei einem Duplex-Förderer mit zwei endlosen Fördergurten ist das seitliche Wechseln der Gurte leicht möglich, ohne daß diese aufgetrennt werden müßten.

**Patentansprüche**

1.   Montagestation mit einem Förderer (10), auf dem Werkstückträger (12) befördert werden, einer Anhaltevorrichtung (30) zum Anhalten der Werkstückträger (12) auf dem Transportweg, und mit einer Positionier- und Haltevorrichtung (15), die einen in einer Aufnahmeposition angehaltenen Werkstückträger (12) aufnimmt und anschließend für den Weitertransport freigibt, **dadurch gekennzeichnet,** daß die Anhaltevorrichtung (30) einen seitlich in den Transportweg hineinragenden bewegbaren Anschlag (Spitze 34) aufweist, und daß die Anhaltevorrichtung (30) gegenüber einem von der Positionier- und Haltevorrichtung (15) festgehaltenen Werkstückträger (II) um mindestens eine ganzzahlige Werkstücklänge stromab angeordnet ist, derart, daß mindestens ein von der Anhaltevorrichtung (30) gestoppter vorlaufender Werkstückträger (I) den von der Positionier- und Haltevorrichtung (15) aufzunehmenden Werkstückträger (II) in der Aufnahmeposition anhält.

2.   Montagestation nach Anspruch 1, dadurch gekennzeichnet, daß die Werkstückträger (12) mindestens an einer der vorlaufenden Ecken eine Abschrägung (26) aufweisen, mit der sie gegen den Anschlag stoßen.

3.   Montagestation nach Anspruch 1 oder 2, dadurch gekennzeichnet, daß ein erster Sensor (35) derart angeordnet ist, daß er das Vorhandensein eines Werkstückträgers (II) in der Aufnahmeposition an der Positionier- und Haltevorrichtung (15) erkennt und daraufhin die Positionier- und Haltevorrichtung (15) betätigt.

4.   Montagestation nach Anspruch 3, dadurch gekennzeichnet, daß ein zweiter Sensor (36) an der Anhaltevorrichtung (30) angeordnet ist, der das Vorhandensein eines von dem Anschlag (Spitze 34) gestoppten Werkstückträgers (I) erkennt und ein Signal erzeugt, das die Betätigung der Positionier- und Haltevorrichtung ermöglicht, sobald der erste Sensor (35) erregt wird.

5.   Montagestation nach Anspruch 4, dadurch gekennzeichnet, daß ein dritter Sensor (37) vorgesehen ist, der erkennt, ob der Förderer (10) stromab von der Anhaltevorrichtung (30) frei ist, und die Freigabe des Anschlags (34) dann veranlaßt, wenn der Förderer (10) frei ist und wenn der erste und der zweite Sensor je einen Werkstückträger (I,II) feststellen.

6.   Montagestation nach einem der Ansprüche 1-5, dadurch gekennzeichnet, daß die Positionier- und Haltevorrichtung (15) nur dann freigebbar ist, wenn der Anschlag (34) in den Transportweg hineinragt.

7. Montagestation nach Anspruch 5 oder 6, dadurch gekennzeichnet, daß der Anschlag (34) dann in den Transportweg vorbewegt wird, wenn der zweite Sensor (36) keinen Werkstückträger (I) feststellt.

8. Montagestation nach einem der Ansprüche 3-7, dadurch gekennzeichnet, daß der erste Sensor (35) am Transportweg seitlich an einer Stelle angeordnet ist, an der sich der an die Abschrägung (26) angrenzende Teil der Seitenwand eines in der Aufnahmeposition befindlichen Werkstückträgers (II) befindet.

9. Montagestation nach einem der Ansprüche 4-8, dadurch gekennzeichnet, daß der zweite Sensor (36) am Transportweg seitlich an einer Stelle angeordnet ist, an der sich der an die Abschrägung (26) angrenzende Teil der Seitenwand eines von der Anhaltevorrichtung (30) angehaltenen Werkstückträgers (I) befindet.

10. Montagestation nach einem der Ansprüche 5-9, dadurch gekennzeichnet, daß der dritte Sensor (37) am Transportweg seitlich an einer Stelle unmittelbar hinter dem Anschlag (34) angeordnet ist.

11. Montagestation nach einem der Ansprüche 1-10, dadurch gekennzeichnet, daß der Förderer (10) einen den Obertrum mindestens eines Förderbandes (11) abstützenden Steg (13b) aufweist und daß an der Positionier- und Haltevorrichtung (15) ein sich quer zum Steg (13b) erstreckender Versteifungsrahmen (20) vorgesehen ist, an dem eine Klinge (16) und auf der gegenüberliegenden Seite ein Betätigungselement (17) zum Ergreifen und Festhalten eines Werkstückträgers relativ zueinander abgestützt sind.

12. Montagestation nach einem der Ansprüche 1-11, dadurch gekennzeichnet, daß die Betätigungsmechanismen für den Anschlag (34) und die Positionier- und Haltevorrichtung (15) untereinander gleich ausgebildet und unabhängig voneinander längs des Förderers (10) verstellbar sind.

FIG.1

FIG.2

FIG.3

FIG.4

9

FIG.5